# FASCICULE DE BREVET EUROPEEN

(11) **EP 3 239 826 B1**
(45) Date de publication et mention de la délivrance du brevet: **30.10.2019**
(21) Numéro de dépôt: 17167391.6
(22) Date de dépôt: 20.04.2017
(51) Int. Cl.: G06F 17/00, G06F 3/0484, G06F 9/451, G06F 16/95

(54) **PROCEDE DE COPIE D'ECRAN**
VERFAHREN ZUR DURCHFÜHRUNG EINES SCREENSHOTS
METHOD FOR SCREENSHOT EXECUTION

(30) Priorité: 26.04.2016 FR 1653682
(43) Date de publication de la demande: 01.11.2017
(73) Titulaire: Bull SAS, 78340 Les Clayes-sous-Bois (FR)
(72) Inventeur: GERPHAGNON, Jean-Olivier, 38450 VIF (FR); BOZGA, Liana, 38240 MEYLAN (FR); ENGUEHARD, David, 92260 FONTENAY AUX ROSES (FR)
(74) Mandataire: Cabinet Plasseraud

(56) Documents cités:
- US-A1- 2011 202 854
- US-A1- 2014 317 483
- US-B1- 7 899 829

## Description

### DOMAINE DE L'INVENTION

L'invention concerne un procédé de copie d'écran. Un procédé de copie d'écran permet de copier en tout ou en partie ce qui est affiché sur un écran afin de pouvoir ultérieurement réafficher l'image résultante sur un écran, que ce soit sur le même écran que l'écran où était affichée l'image initialement obtenue ou bien sur un autre écran.

### CONTEXTE DE L'INVENTION

Selon un premier art antérieur, il est connu un procédé de copie d'écran dans lequel une simple capture d'écran est réalisée. L'image affichée à l'écran est enregistrée, mais elle seule en tant que simple copie de ce qui est visible à l'écran, sans aucun élément additionnel. Or, certains éléments présentés à l'écran sont enrichis avec des liens pointant vers d'autres images ou d'autres objets. Lors de cette simple capture d'écran, seule l'image affichée elle-même telle que visible à l'écran est enregistrée, les éléments additionnels pouvant enrichir l'image affichée par l'intermédiaire de liens activables étant définitivement perdus lors de cet enregistrement. L'image visible du lien est donc enregistrée, mais pas sa fonctionnalité, c'est-à-dire que lors d'un réaffichage ultérieur de cette image enregistrée, le lien est réaffiché aussi, mais d'une part il n'est plus activable, et l'objet associé à ce lien a été quant à lui totalement perdu.

Ainsi, lors d'une copie d'écran, que celle-ci soit totale ou bien seulement partielle auquel cas elle est appelée partie d'écran, la génération de la sortie est une donnée brute sous un format d'image standard, par exemple de type JPEG ou PNG. Ce format d'image contient un ensemble d'informations de type pixels permettant de reconstituer une image à l'écran par affichage de cette image lors de l'ouverture du fichier stockant cette image.

Cela signifie que la copie d'écran, par exemple d'une page web (Internet) ou bien d'un autre document contenant des liens comme des pointeurs, ne permet pas de conserver ces liens et ne fournit donc qu'une simple image fixe dénuée d'informations autres que les pixels, c'est-à-dire ayant perdu les éléments additionnels pouvant enrichir cette simple image.

En effet, en cas de prise d'une capture d'écran, l'ensemble des éléments de type liens ou pointeurs sont donc logiquement perdus. Il est par conséquent impossible par exemple de retrouver, à partir d'une capture d'écran, la source de l'information contenue dans cette capture d'écran.

Cette simple capture d'écran ne fait que prendre la couleur, ou le cas échéant le niveau de gris, de l'ensemble des points de l'image affichée, ces points étant appelés pixels, sans y ajouter d'autres informations que ces simples couleurs ou niveaux de gris. En résumé, cette capture d'écran peut être considérée comme s'apparentant à une simple copie d'image brute comme en ferait un appareil photo.

Selon un deuxième art antérieur, il est connu un procédé de copie de fichier dans lequel l'ensemble du fichier stockant l'image affichée va être enregistré. Toutefois, ce fichier n'est pas enregistré sous un format de fichier image. Il n'est pas possible d'en sélectionner simplement une partie, ou en tous cas pas possible d'en sélectionner une partie de manière graphique, par exemple en sélectionnant cette partie d'image graphiquement directement sur l'image affichée ; il est donc encore moins possible d'utiliser ensuite directement et indépendamment une telle partie d'image, soit seule soit en combinaison avec un autre document dans lequel elle serait par exemple intégrée.

Ce deuxième art antérieur ne fournit qu'une simple fonctionnalité correspondant à un simple « enregistrer sous » d'une page Web ou d'un autre document de type texte par exemple, sans permettre de sélectionner une partie de cette page web ou de cet autre document de type texte, lorsque celle-ci ou celui-ci contient des liens ou des pointeurs. Ainsi, par exemple si l'utilisateur souhaite capturer un tableau qui est disposé dans une page web et qui contient des pointeurs vers d'autres pages, cet utilisateur ne peut alors pas sélectionner ce tableau et obtenir ainsi un ensemble de données lui permettant d'intégrer ce tableau dans d'autres documents, par exemple de type courriel ou présentation texte et/ou présentation graphique. Ce deuxième art antérieur nécessite également un autre logiciel qui est adapté pour pouvoir relire le fichier obtenu, Les documents US 2011/202854 et US 7 899 829 B1 divulguent un exemple de procédé de copie d'écran.

### RESUME DE L'INVENTION

L'invention est définie par les revendications indépendantes, des aspects supplémentaires de l'invention sont décrits dans les revendications dépendantes. Les modes de réalisation qui ne font pas partie de l'étendue de ces revendications ne décrivent pas l'invention. Le but de la présente invention est de fournir un procédé de copie d'écran palliant au moins partiellement les inconvénients précités.

Plus particulièrement, l'invention vise à fournir un procédé de copie d'écran qui présente un double avantage qui est, d'une part de pouvoir effectuer simplement une capture d'écran, c'est-à-dire de copier une image affichée sur un écran, pour non seulement l'image affichée sur l'écran, mais également pour seulement une partie de cette image sélectionnée graphiquement sur l'écran sur lequel l'image correspondante est affichée, et d'autre part de pouvoir enregistrer également et simplement tout ou partie des éléments additionnels qui sont susceptibles d'enrichir l'image affichée et qui sont perdus lors d'une capture d'écran classique.

Pour cela, ce document propose une capture d'écran de tout ou partie d'une image affichée, incluant la possibilité de copie de seulement une partie d'image sélectionnée graphiquement, avec copie des pointeurs ou autre liens inclus dans cette partie sélectionnée de l'image affichée, ainsi qu'une conservation de l'association entre ces pointeurs et leurs coordonnées relatives dans la partie d'image affichée, de manière à ce que lors d'un affichage ultérieur de la partie d'image capturée, des pointeurs activables soient affichés aux bons endroits dans la partie d'image réaffichée. Notamment, la correspondance géographique entre pointeurs et pixels d'image est conservée, entre la partie d'image affichée et capturée d'une part, et la partie d'image réaffichée d'autre part, permettant ainsi à l'utilisateur de bénéficier des enrichissements de la partie d'image capturée et réaffichée dans les mêmes conditions que lors de l'affichage initial de cette partie d'image.

Une coordonnée relative est une coordonnée par rapport à la partie d'image capturée puis réaffichée, et non pas une coordonnée absolue dans le référentiel de l'écran où l'image était initialement affichée. Une coordonnée relative est par exemple le milieu de la hauteur et le quart de la longueur en partant de la gauche, dans la partie d'image réaffichée, tandis qu'une coordonnée absolue est par exemple à 15 pixels du bord supérieur de l'écran et à 20 pixels du bord gauche de l'écran. Une coordonnée relative permet de conserver la bonne position d'un pointeur sur la partie d'image capturée même si celle-ci est réaffichée avec une taille différente et à un endroit différent, par rapport à son affichage initial ayant donné lieu à sa capture sur l'écran.

Selon des modes de réalisation préférentiels, ce document propose notamment de conserver le couplage permettant, lors d'une capture d'écran, d'obtenir à la fois l'image de ce que l'on souhaite capturer mais également l'ensemble des hyperliens, offrant alors une image enrichie ou dynamique, c'est-à-dire susceptible d'évoluer en offrant du contenu supplémentaire lorsque l'utilisateur le demande, ce qui n'était pas le cas avec les images réaffichées après une simple capture d'écran classique du premier art antérieur précédemment décrit.

Selon des modes de réalisation préférentiels, ce document propose d'enrichir la solution de simple capture d'écran, en y ajoutant les informations relatives au contexte de prise de capture mais également les liens associés. Cela permet ainsi, lors d'une capture d'une page web par exemple sur laquelle se trouve des liens vers d'autres pages ou sites web, de conserver ceux-ci dans l'image capturée et destinée à être ultérieurement réaffichée pour accéder à ces autres pages et sites et les utiliser.

Pour cela, lors de la capture d'écran améliorée, ce n'est pas une simple image fixe qui est générée, laquelle serait par exemple de type PNG ou JPGEG standard, mais un fichier image enrichi intégrant, dans un format structuré, les données relatives aux éléments additionnels tels que les liens. Ces données additionnelles, dénommées metadonnées, pourraient être stockées dans une zone spécifique du fichier image standard dans un format standardisé tel que par exemple XML.

A cette fin, ce document propose un procédé de copie d'écran, comprenant la copie, sous forme de fichier image, d'une partie d'une image affichée sur un écran par sélection graphique de cette partie d'image par un utilisateur, cette copie de partie d'image sélectionnée entraînant automatiquement : d'une part, la copie du ou des pointeurs associés à cette partie d'image avec les coordonnées de ces pointeurs dans cette partie d'image, ces pointeurs renvoyant respectivement vers des objets, d'autre part, le maintien des liens respectifs entre ces pointeurs et ces coordonnées de manière à ce que, lors d'un réaffichage ultérieur de cette partie d'image sur un écran, la sélection graphique d'un point correspondant à l'une de ces coordonnées par un utilisateur entraîne automatiquement l'activation du pointeur correspondant à la coordonnée du point sélectionné et le renvoi à l'objet correspondant au pointeur activé.

Image copiée ou affichée est à prendre au sens de portion d'écran copiée ou affichée, et non pas au sens de format de fichier. Fichier image est à prendre au sens de format de fichier. L'image copiée ou affichée, peut correspondre à différents formats, par exemple à une image au sens d'un objet en format de fichier image, d'un texte, d'une vidéo, d'une photo, d'une combinaison des éléments qui précèdent, etc...

Suivant des modes de réalisation préférés, ce document comprend une ou plusieurs des caractéristiques suivantes qui peuvent être utilisées séparément ou en combinaison partielle entre elles ou en combinaison totale entre elles.

De préférence, après la sélection de cette partie d'image par un utilisateur, ces pointeurs et leurs coordonnées sont identifiés et copiés au cours d'un parcours de l'ensemble des coordonnées de cette partie d'image sélectionnée.

Ainsi, l'ensemble des liens contenus dans la partie d'image sélectionnée ainsi que l'ensemble des éléments additionnels qui enrichissent la partie d'image sélectionnée et vers lesquels pointent ces liens, va pouvoir être enregistré à l'aide d'un processus simple et systématique.

L'information relative au lien sur un pixel ou sur une coordonnée est connue par le système d'exploitation, plus précisément par le gestionnaire d'interface graphique qui est une application située au-dessus de ce système d'exploitation. Par conséquent, lors de la copie d'écran, l'ensemble des coordonnées de la partie d'image sélectionnée va donc être parcourue, parcours pendant lequel sont donc copiées les métadonnées, notamment les liens hypertextes, correspondant à ces coordonnées.

De préférence, ces pointeurs, leurs coordonnées et leurs liens respectifs, sont copiés sous forme de métadonnées intégrées à la structure du fichier image contenant cette partie d'image sélectionnée.

Ainsi, un seul fichier complet contient l'image capturée et enrichie. Sa manipulation est plus simple et sa circulation dans un réseau informatique plus simple et plus sécurisée.

Dans ce cas, ces informations additionnelles, par exemple les pointeurs, sont ajoutées, en tant que métadonnées, dans la structure du fichier image, certains formats de fichier image permettant en effet l'ajout d'informations complémentaires. Préférentiellement, une intégration dans un format de fichier graphique permettant l'ajout de ces métadonnées, notamment les informations sur les hyperliens, directement au sein du fichier image, sera réalisée. Cette intégration offre ainsi à la fois la transparence pour l'utilisateur, lequel utilisateur n'a à manipuler ou transférer qu'un seul fichier, et la compatibilité avec l'ensemble des outils graphiques existants, soit sous un format standard dans le cas des outils existants déjà en liaison avec les fichiers images, soit avec un outil spécifique pour utiliser les métadonnées ajoutées à ces fichiers images.

De préférence, dans une alternative, ces pointeurs, leurs coordonnées et leurs liens respectifs, sont copiés sous forme de métadonnées externes à la structure du fichier image contenant cette partie d'image sélectionnée.

Ainsi, l'opération de capture améliorée d'image peut être réalisée plus simplement. Toutefois, la manipulation et le transfert de l'ensemble ainsi constitué seront plus délicats que dans le cas d'un fichier unique. Un exemple de structure de fichier qui est externe au fichier image et qui intègre les métadonnées, est par exemple un fichier de type XML.

Le stockage de ces informations additionnelles va alors être réalisé dans un fichier séparé du fichier graphique standard, lequel est par exemple de type JPEG ou GIF ou PNG, afin de conserver la compatibilité avec les outils de traitement graphique existants. Dans ce cas, une structure particulière est définie afin de faire le lien entre coordonnées relatives dans l'image et pointeurs correspondants, par exemple liens hypertextes correspondants. Ainsi est réalisée la sauvegarde de l'image et des métadonnées, par exemple de type liens, qui sont associées aux différents points de l'image ou de la partie d'image capturée.

De préférence, ces pointeurs, leurs coordonnées et leurs liens respectifs, sont connus du gestionnaire d'interface graphique apte à afficher sur un écran la partie d'image copiée.

Ainsi, ce gestionnaire d'interface graphique pourra, lors du réaffichage de la partie d'image initialement affichée et ensuite enregistrée, réafficher simultanément les pointeurs associés, directement aux bons endroits de l'image réaffichée, sans opération supplémentaire visant à communiquer préalablement les informations nécessaires à ce gestionnaire d'interface graphique.

Ensuite, lorsque l'utilisateur clique sur un point de la partie d'image réaffichée, c'est-à-dire sur une coordonnée relative de l'image où se trouvait un lien hypertexte, le système graphique est informé qu'il existe également un lien hypertexte dans la partie d'image réaffichée permettant alors d'ouvrir le lien dont la position correspond à cette coordonnée relative. Ce lien est ouvert via un browser Web en cas de page Web, via une application de type traitement de texte ou présentation graphique s'il s'agit d'un lien local vers un fichier ou encore d'un lien vers un serveur. Cette communication est faite entre l'application permettant de lire la capture améliorée ou la copie améliorée d'une part et le gestionnaire de l'interface graphique d'autre part.

De préférence, les pointeurs sont des liens hypertexte. Ces pointeurs peuvent aussi être par exemple des liens hypertexte au sens large, de quelque type que ce soit, avec des protocoles cibles tels que HTTP, DAV, FTP, ou peuvent aussi être d'autres types d'éléments.

La représentation des éléments sur un écran, et plus précisément des liens que l'on nomme en général liens hypertexte, mais qui en fait peuvent avoir la forme d'une image, d'une animation, d'une vidéo, correspondent en fait à des coordonnées dans un espace. Une action de l'utilisateur au niveau de ces coordonnées, par exemple par l'intermédiaire d'un clic de souris, entraînera l'activation du lien ou du pointeur correspondant qui permettra l'accès à la destination du lien ou du pointeur correspondant, et permettra ainsi à l'utilisateur d'accéder à l'objet ou au document associé à ce lien ou à ce pointeur.

De préférence, les objets sont respectivement des autres images à afficher ou des autres parties d'image à afficher.

Ainsi, cette copie améliorée ou capture améliorée permet d'enregistrer et de réafficher plusieurs images imbriquées les unes dans les autres en cascade, chacune des images étant affichable par l'activation du pointeur correspondant qui est affiché sur une autre image.

De préférence, seulement une partie de l'image affichée est copiée, pas toute l'image affichée. Alors, ce qui est copié correspond à strictement moins que toute l'image.

Ainsi, dans le cas d'une partie d'image sélectionnée, le deuxième art antérieur présenté ne fonctionnant pas du tout, l'intérêt de l'invention est d'autant plus important, aucun art antérieur ne proposant une capture améliorée d'une partie d'image seulement.

De préférence, la sélection graphique de cette partie d'image par un utilisateur est une capture par cet utilisateur d'une portion d'écran affichant cette partie d'image sélectionnée.

De préférence, le fichier image est sous un format directement intégrable dans un autre document, notamment de type présentation ou courriel, par le gestionnaire d'interface graphique ou bien par une autre application qui sera avantageusement une application externe au système d'exploitation.

Ainsi, la partie d'image copiée ou capturée, même et surtout enrichie d'éléments additionnels, peut être directement et simplement utilisée ou réutilisée par l'utilisateur.

De préférence, ce fichier image contient la couleur, ou le niveau de gris, de chaque pixel de la partie d'image copiée. Cette couleur ou ce niveau de gris constitue l'information affichée en tout point de l'image et de la partie d'image capturée, les éléments additionnels n'étant généralement présents qu'en certains points de l'image et de la partie d'image capturée.

De préférence, lors d'un réaffichage ultérieur de cette partie d'image sur un écran, une correspondance entre les coordonnées copiées et les nouvelles coordonnées du réaffichage est effectuée, intégrant le cas échéant le changement de position sur l'écran de cette partie d'image et le changement d'agrandissement ou de réduction de cette partie d'image.

Ainsi, la partie d'image capturée ou copiée peut être réaffichée et réutilisée facilement, quelles que soient les conditions de réaffichage et quelle que soit la configuration de l'écran sur lequel la partie d'image copiée est réaffichée, et même si cette partie d'image est réaffichée sur un écran différent de celui sur lequel elle a été capturée.

Ensuite, lors de l'ouverture de ce fichier qui contient les informations sur les liens dans la partie d'image copiée, un outil lit les informations sur ces liens et calcule leurs coordonnées dans la partie d'image en fonction d'une part de leur position sur l'écran, qui peut fort bien ne pas être la même que celle lors de la copie d'écran, notamment en raison d'une résolution différente ou d'une présentation dans une fenêtre par exemple, et en fonction d'autre part d'un éventuel agrandissement ou d'une éventuelle réduction de la partie d'image réaffichée par rapport à son affichage initial avant copie.

De préférence, lors de la sélection graphique par l'utilisateur d'un point de la partie d'image réaffichée, l'application lisant ce fichier image informe le gestionnaire d'interface graphique réaffichant cette partie d'image ou bien une autre application réaffichant cette partie d'image, de l'existence d'un pointeur associé à ce point sélectionné.

Ainsi, par simple sélection graphique de la position d'un pointeur sur la partie d'image réaffichée, l'utilisateur peut activer ce pointeur et accéder à l'objet correspondant à ce pointeur activé, comme lors de l'affichage initial de l'image.

Ce document concerne aussi une utilisation d'un programme informatique pour réaliser une copie d'écran selon le procédé de copie d'écran selon l'invention précédemment décrit.

Ce document concerne encore un produit programme d'ordinateur, comprenant des instructions de code de programme enregistrés sur un support lisible par un ordinateur, comprenant des moyens de programmation lisibles par ordinateur pour réaliser une copie d'écran selon le procédé de copie d'écran selon l'invention, lorsque ledit programme fonctionne sur un ordinateur.

D'autres caractéristiques et avantages de l'invention apparaîtront à la lecture de la description qui suit d'un mode de réalisation préféré de ce document, donnée à titre d'exemple et en référence aux dessins annexés.

### BREVE DESCRIPTION DES DESSINS

La figure 1 représente schématiquement un exemple d'affichage à l'écran correspondant à l'affichage initial avant le procédé de copie d'écran selon un mode de réalisation de l'invention.
La figure 2 représente schématiquement un exemple d'affichage à l'écran correspondant au procédé de copie d'écran selon un mode de réalisation de l'invention.
La figure 3 représente schématiquement un exemple d'affichage à l'écran correspondant à une première alternative d'un réaffichage ultérieur au déroulement du procédé de copie d'écran selon un mode de réalisation de l'invention.
La figure 4 représente schématiquement un exemple d'affichage à l'écran correspondant à une deuxième alternative d'un réaffichage ultérieur au déroulement procédé de copie d'écran selon un mode de réalisation de l'invention.
La figure 5 représente schématiquement un exemple de communication entre les différents éléments d'un système informatique mettant en œuvre l'affichage initial, le procédé de copie d'écran selon un mode de réalisation de l'invention, et le réaffichage ultérieur, d'une partie d'image copiée.

### DESCRIPTION DETAILLEE DE L'INVENTION

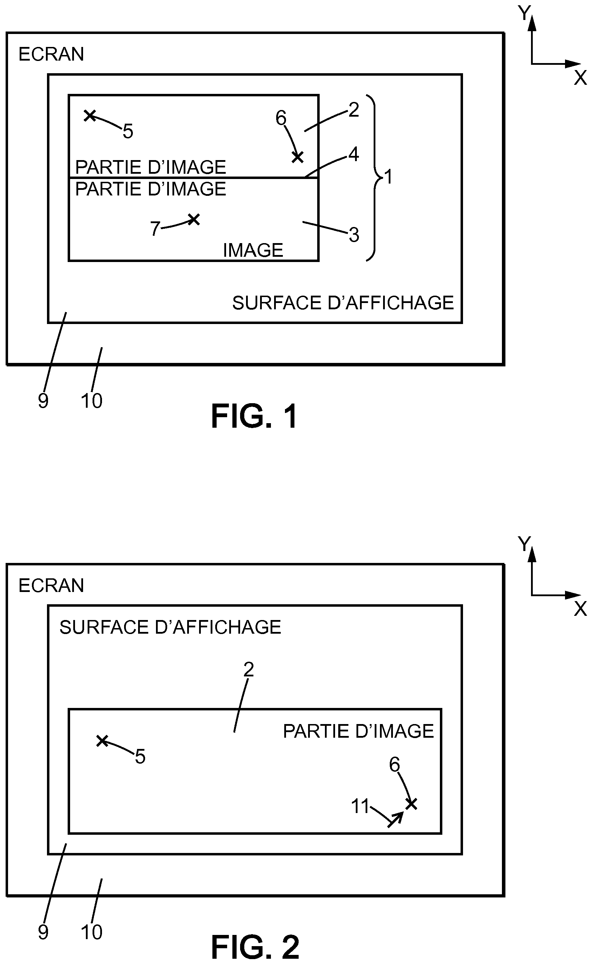

La figure 1 représente schématiquement un exemple d'affichage à l'écran correspondant à l'affichage initial avant le procédé de copie d'écran selon un mode de réalisation de l'invention.

Un écran 10 possède une surface d'affichage 9 sur laquelle est initialement affichée une image 1. Un repère XY permet de faire correspondre un système de coordonnées avec tous les points de cette image 1 affichée.

L'utilisateur va vouloir choisir une partie 2 de l'image 1 affichée, parce que cette partie 2 d'image l'intéresse, l'utilisateur n'étant par contre pas intéressé par le reste de l'image 1 affichée, c'est-à-dire par la partie 3 de l'image 1. La partie 2 d'image contient des éléments additionnels, par exemple des pointeurs 5 et 6, respectivement disposés près des coins supérieur gauche et inférieur droit de la partie 2 d'image. La partie 3 d'image contient un élément additionnel, par exemple un pointeur 7 disposé au milieu de la partie 3 d'image.

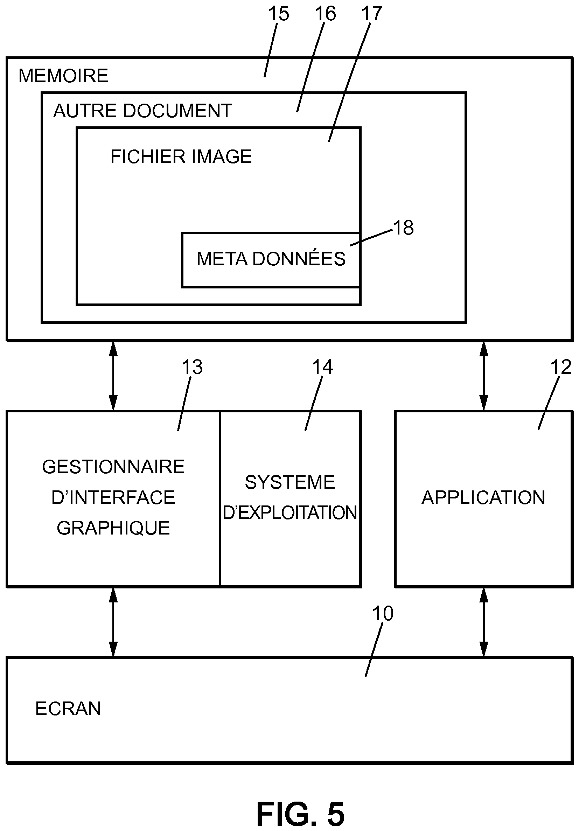

L'utilisateur sélectionne graphiquement la partie 2 d'image à l'intérieur de l'image 1 affichée, par l'intermédiaire d'un cadre 4 de sélection graphique, par exemple à l'aide d'une souris associée à l'écran 10 mais non représentée sur la figure 1 par souci de clarté et de simplicité. Lors d'une activation du cadre 4 de sélection, par exemple par l'intermédiaire d'un clic de souris correspondant, la partie 2 d'image sélectionnée graphiquement sur l'écran 10, ou plus précisément sur la surface d'affichage 9 de l'écran 10, est enregistrée en mémoire, comme représenté sur la figure 5 décrite ultérieurement.

La figure 2 représente schématiquement un exemple d'affichage à l'écran correspondant au procédé de copie d'écran selon un mode de réalisation de l'invention.

Dans l'image 1 affichée, seule la partie supérieure 2 d'image a été enregistrée, avec les pointeurs 5 et 6 également enregistrés, la partie inférieure 3 d'image n'ayant pas été enregistrée, le pointeur 7 n'ayant pas été enregistré non plus.

L'utilisateur choisit de réafficher sur l'écran 10, ou plus précisément sur la surface d'affichage 9 de l'écran 10, la partie 2 d'image qui avait été enregistrée ou copiée. La configuration de l'écran 10 étant différente de celle existant lors de l'enregistrement, la partie 2 d'image copiée est réaffichée à un autre endroit de l'écran 10 et avec une autre taille que lors de son affichage initial sur l'écran juste avant son enregistrement. Lorsque la partie 2 d'image a été initialement affichée et copiée, elle était de petite taille, en haut de l'écran 10 et décalée vers la gauche de l'écran 10. La partie 2 d'image préalablement copiée est réaffichée sur l'écran 10, en étant de grande taille, en bas de l'écran 10, et latéralement centrée au milieu de l'écran 10.

La position relative des pointeurs 5 et 6 par rapport à la partie 2 d'image copiée n'a pas changée. En effet, le pointeur 5 est affiché au niveau du coin supérieur gauche de la partie 2 d'image, sur la même portion de partie 2 d'image si le pointeur 5 est étendu, voire sur le même point si le pointeur 5 est ponctuel, que sur la figure 1. De même, le pointeur 6 est affiché au niveau du coin inférieur droit de la partie 2 d'image, sur la même portion de partie 2 d'image si le pointeur 6 est étendu, voire sur le même point si le pointeur 6 est ponctuel, que sur la figure 1.

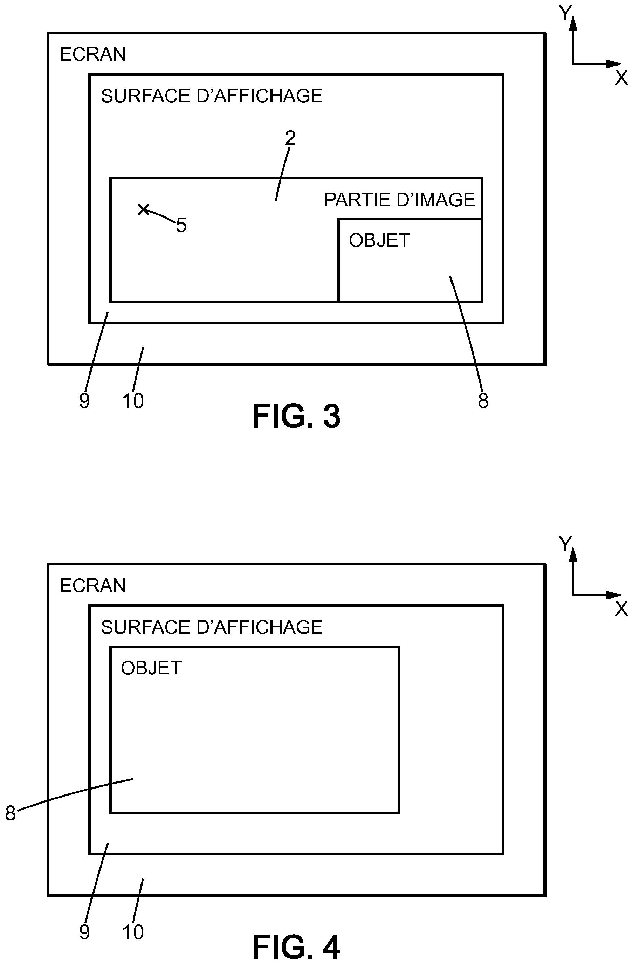

En amenant un curseur 11 au niveau du pointeur 6, curseur 11 représenté sur la figure 2 par une flèche de sélection dont le déplacement sur la surface d'affichage 9 de l'écran 10 est commandé par exemple par une souris non représentée sur la figure 2 par souci de clarté et de simplicité, l'utilisateur peut ensuite activer le pointeur 6, par exemple en cliquant alors sur la souris. Cette activation du pointeur 6 va amener l'affichage d'un objet, par exemple une autre image ou un texte ou une vidéo ou encore autre chose, sur l'écran 10, et même éventuellement sur une sous-partie de la partie 2 d'image réaffichée, comme expliqué en liaison avec les figures 3 et 4 qui représentent deux alternatives d'affichage de l'objet correspondant au pointeur 6 lequel était situé sur la partie 2 d'image réaffichée et lequel a été activé par l'utilisateur.

La figure 3 représente schématiquement un exemple d'affichage à l'écran correspondant à une première alternative d'un réaffichage ultérieur au déroulement du procédé de copie d'écran selon un mode de réalisation de l'invention.

Après l'activation du pointeur 6, la partie 2 d'image réaffichée sur l'écran 10 n'a pas bougé, pas plus que le pointeur 5 situé dans le coin supérieur gauche de la partie 2 d'image. En revanche, le pointeur 6 a disparu et à l'endroit où ce pointeur 6 se trouvait, vient d'être affiché un objet 8, par exemple sous forme d'une sous-partie de la partie 2 d'image réaffichée.

Cet objet 8 correspond au pointeur 6, il lui est associé. Cet objet 8 peut être une autre image, du texte, une vidéo, ou encore un autre élément. Cet objet 8 peut être visualisé par l'utilisateur, il peut également être utilisé par l'utilisateur qui pourrait par exemple activer un autre pointeur (par exemple en cliquant dessus), non représenté par souci de clarté et de simplicité sur la figure 3, situé sur la sous-partie 8 de partie 2 d'image affichée, de manière à afficher encore un autre objet, non représenté par souci de clarté et de simplicité sur la figure 3, et éventuellement ainsi de suite en cascade.

La figure 4 représente schématiquement un exemple d'affichage à l'écran correspondant à une deuxième alternative d'un réaffichage ultérieur au déroulement procédé de copie d'écran selon un mode de réalisation de l'invention.

Après l'activation du pointeur 6, la partie 2 d'image réaffichée sur l'écran 10 a disparu tout comme le pointeur 5 qui était situé dans le coin supérieur gauche de la partie 2 d'image. Soit, la partie 2 d'image est recouverte complétement par l'objet 8 et ne réapparaîtra que lorsque l'objet 8 disparaîtra, soit elle n'est plus affichée et ne sera réaffichée que lorsque l'objet 8 disparaîtra. De même, le pointeur 6 a disparu. L'objet 8 est seul à être affiché sur l'écran 10.

Cet objet 8 correspond au pointeur 6, il lui est associé. Cet objet 8 peut être une autre image, du texte, une vidéo, ou encore un autre élément. Cet objet 8 peut être visualisé par l'utilisateur, il peut également être utilisé par l'utilisateur qui pourrait par exemple activer un autre pointeur (par exemple en cliquant dessus), non représenté par souci de clarté et de simplicité sur la figure 4, situé sur l'objet 8 affiché, de manière à afficher encore un autre objet, non représenté par souci de clarté et de simplicité sur la figure 4, soit sur l'objet 8, recouvrant en tout ou partie, soit à la place de l'objet 8.

La figure 5 représente schématiquement un exemple de communication entre les différents éléments d'un système informatique mettant en œuvre l'affichage initial, le procédé de copie d'écran selon un mode de réalisation de l'invention, et le réaffichage ultérieur, d'une partie d'image copiée.

L'écran 10 est intégré dans un système informatique comprenant une mémoire 15, un gestionnaire 13 d'interface graphique associé à un système d'exploitation 14, ce gestionnaire 13 d'interface graphique étant adapté pour gérer les affichages sur l'écran 10, et/ou une autre application 12 externe au système d'exploitation 14 mais également adaptée pour gérer les affichages sur l'écran 10. Soit le gestionnaire 13 d'interface graphique, soit l'autre application 12, va communiquer de manière bidirectionnelle d'une part avec l'écran 10 et d'autre part avec la mémoire 15, pour pouvoir faire deux opérations.

La première opération consiste à copier dans la mémoire 15 un élément préalablement affiché sur l'écran 10, puis sélectionné par l'utilisateur pour être copié. La deuxième opération consiste à réafficher sur l'écran 10 (ou sur un autre écran) un élément préalablement copié dans la mémoire 15, après avoir été initialement affiché, par exemple sur l'écran 10, puis sélectionné par l'utilisateur. L'élément objet de ces deux opérations est par exemple la partie 2 d'image ainsi que les pointeurs 5 et 6 qu'elle contient tout comme les objets associés ou correspondant à ces pointeurs 5 et 6.

La partie 2 d'image initialement affichée sur l'écran 10 puis copiée en mémoire 15 après avoir été sélectionnée par l'utilisateur, est par exemple stockée dans un fichier image 17, c'est-à-dire un fichier de format image. Le fichier image 17 peut être intégré dans un autre document 16, comme représenté sur la figure 5, ou non. Les pointeurs 5 et 6 sont stockés sous forme de métadonnées 18 lesquelles peuvent être soit intégrées au fichier image 17 comme sur la figure 5, soit pourraient être stockées dans d'autres fichiers non représentés sur la figure 5 par souci de clarté et de simplicité.

Lorsque l'utilisateur veut réafficher la partie 2 d'image copiée avec les pointeurs 5 et 6 associés pour éventuellement ensuite pouvoir accéder aux objets correspondant à ces pointeurs 5 et 6, soit le gestionnaire 13 d'interface graphique soit l'autre application 12 va, d'une part chercher le fichier image 17 en mémoire 15 pour réafficher sur l'écran 10 la partie d'image 2, et d'autre part chercher les métadonnées 18 en mémoire 15 pour réafficher sur l'écran les pointeurs 5 et 6. Ces pointeurs 5 et 6, réaffichés dans la partie 2 d'image réaffichée, seront activables par le même type de sélection de la part de l'utilisateur que celui qui pouvait les activer lors de leur affichage initial dans la partie 2 d'image lorsque l'image 1 était affichée entièrement.

Une fois la partie 2 d'image réaffichée, celle-ci peut être à nouveau copiée par exemple dans un autre document 16, comme cela est représenté sur la figure 5. Cette partie 2 d'image réaffichée pourrait aussi être à nouveau copiée par exemple seule, comme cela n'est pas représenté sur la figure 5.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de copie d'écran, comprenant la copie, sous forme de fichier image (17), d'une partie (2) d'une image (1) affichée sur un écran (10) par sélection graphique (4) de cette partie (2) d'image (1) par un utilisateur, cette copie de partie (2) d'image (1) sélectionnée entraînant automatiquement :
- d'une part, la copie du ou des pointeurs (5, 6) associés à cette partie (2) d'image (1) avec les coordonnées de ces pointeurs (5, 6) dans cette partie (2) d'image (1), ces pointeurs (5, 6) renvoyant respectivement vers des objets (8),
- d'autre part, le maintien des liens respectifs entre ces pointeurs (5, 6) et ces coordonnées de manière à ce que, lors d'un réaffichage ultérieur de cette partie (2) d'image (1) sur l'écran (10), la sélection graphique (11) d'un point correspondant à l'une de ces coordonnées par un utilisateur entraîne automatiquement l'activation du pointeur (5, 6) correspondant à la coordonnée du point sélectionné et le renvoi à l'objet (8) correspondant au pointeur (5, 6) activé,
- la sélection graphique (4) de cette partie (2) d'image (1) par un utilisateur étant une capture par cet utilisateur d'une portion d'écran (10) affichant cette partie (2) d'image (1) sélectionnée,
- les coordonnées de ces pointeurs (5, 6) dans cette partie (2) d'image (1) étant des coordonnées relatives qui sont des coordonnées par rapport à la partie (2) d'image (1) capturée puis réaffichée, permettant de conserver la bonne position d'un pointeur (5, 6) sur la partie (2) d'image (1) capturée même si celle-ci est réaffichée avec une taille différente et à un endroit différent, par rapport à son affichage initial ayant donné lieu à sa capture sur l'écran (10),
- lors du réaffichage ultérieur de cette partie (2) d'image (1) sur l'écran (10), une correspondance entre les coordonnées copiées et les nouvelles coordonnées du réaffichage étant effectuée, intégrant le cas échéant le changement de position sur l'écran (10) de cette partie (2) d'image (1) et le changement d'agrandissement ou de réduction de cette partie (2) d'image (1).

2. Procédé de copie d'écran selon la revendication 1, **caractérisé en ce que**, après la sélection de cette partie (2) d'image (1) par un utilisateur, ces pointeurs (5, 6) et leurs coordonnées sont identifiés et copiés au cours d'un parcours de l'ensemble des coordonnées de cette partie (2) d'image (1) sélectionnée.

3. Procédé de copie d'écran selon la revendication 1 ou 2, **caractérisé en ce que** ces pointeurs (5, 6), leurs coordonnées et leurs liens respectifs, sont copiés sous forme de métadonnées (18) intégrées à la structure du fichier image (17) contenant cette partie (2) d'image (1) sélectionnée.

4. Procédé de copie d'écran selon la revendication 1 ou 2, **caractérisé en ce que** ces pointeurs (5, 6), leurs coordonnées et leurs liens respectifs, sont copiés sous forme de métadonnées (18) externes à la structure du fichier image (17) contenant cette partie (2) d'image (1) sélectionnée.

5. Procédé de copie d'écran selon l'une quelconque des revendications précédentes, **caractérisé en ce que** ces pointeurs (5, 6), leurs coordonnées et leurs liens respectifs, sont connus du gestionnaire d'interface graphique (13) apte à afficher sur l'écran (10) la partie (2) d'image (1) copiée.

6. Procédé de copie d'écran selon l'une quelconque des revendications précédentes, **caractérisé en ce que** les pointeurs (5, 6) sont des liens hypertexte.

7. Procédé de copie d'écran selon l'une quelconque des revendications précédentes, **caractérisé en ce que** les objets (8) sont respectivement des autres images à afficher ou des autres parties d'image à afficher.

8. Procédé de copie d'écran selon l'une quelconque des revendications précédentes, **caractérisé en ce que** seulement une partie (2) de l'image (1) affichée est copiée, pas toute l'image (1) affichée.

9. Procédé de copie d'écran selon l'une quelconque des revendications précédentes, **caractérisé en ce que** le fichier image (17) est sous un format directement intégrable dans un autre document (16), notamment de type présentation ou courriel, par le gestionnaire d'interface graphique (13) ou bien par une autre application (12).

10. Procédé de copie d'écran selon l'une quelconque des revendications précédentes, **caractérisé en ce que** ce fichier image (17) contient la couleur, ou le niveau de gris, de chaque pixel de la partie (2) d'image (1) copiée.

11. Procédé de copie d'écran selon l'une quelconque des revendications précédentes, **caractérisé en ce que**, lors de la sélection graphique (11) par l'utilisateur d'un point de la partie (2) d'image (1) réaffichée, l'application lisant ce fichier image (17) informe le gestionnaire d'interface graphique (13) réaffichant cette partie (2) d'image (1) ou bien une autre application (12) réaffichant cette partie (2) d'image (1), de l'existence d'un pointeur (5, 6) associé à ce point sélectionné.

12. Utilisation d'un programme informatique pour réaliser une copie d'écran (10) selon le procédé de copie d'écran (10) selon l'une quelconque des revendications précédentes.

13. Produit programme d'ordinateur, comprenant des instructions de code de programme enregistrés sur un support lisible par un ordinateur, comprenant des moyens de programmation lisibles par l' ordinateur pour réaliser une copie d'écran (10) selon le procédé de copie d'écran (10) selon l'une quelconque des revendications précédentes, lorsque ledit programme est exécuté sur l'ordinateur.

## Patentansprüche

1. Verfahren zum Kopieren eines Bildschirms, umfassend das Kopieren in Form einer Bilddatei (17) eines Teil (2) eines auf dem Bildschirm (10) angezeigten Bilds (1) durch grafische Auswahl (4) des Teils (2) des Bilds (1) durch einen Benutzer, wobei das Kopieren des ausgewählten Teils (2) des Bilds (1) automatisch auslöst:
- einerseits das Kopieren von dem oder den Zeigern (5, 6), welche dem Teil (2) des Bilds (1) zugeordnet sind, zusammen mit den Koordinaten der Zeiger (5, 6) in dem Teil (2) des Bilds (1), wobei die Zeiger (5, 6) jeweils zu den Objekten (8) weisen,
- andererseits das Beibehalten von jeweiligen Verbindungen zwischen den Zeigern (5, 6) und den Koordinaten derart, dass bei einem späteren erneuten Anzeigen des Teils (2) des Bilds (1) auf dem Bildschirm (10) die grafische Auswahl (11) eines Punkts, welcher der einen der Koordinaten entspricht, durch einen Benutzer automatisch die Aktivierung des Zeigers (5, 6), welcher der Koordinate des ausgewählten Punkts entspricht, und Rückgabe des Objekts (8) auslöst, welches dem aktivierten Zeiger (5, 6) entspricht,
- wobei die grafische Auswahl (4) des Teils (2) des Bilds (1) durch einen Benutzer ein Aufnehmen eines Abschnitts des Bildschirms (10) durch den Benutzer ist, welcher den ausgewählten Teil (2) des Bilds (1) anzeigt,
- wobei die Koordinaten der Zeiger (5, 6) in dem Teil (2) des Bilds (1) relative Koordinaten sind, welche Koordinaten bezüglich des aufgenommenen und dann erneut angezeigten Teils (2) des Bilds (1) sind, was ein Bewahren der richtigen Position eines Zeigers (5, 6) auf dem aufgenommenen Teil (2) des Bilds (1) selbst dann erlaubt, wenn es mit einer anderen Größe und an einem anderen Ort erneut angezeigt wird, bezüglich seiner ursprünglichen Anzeige, welche Anlass für seine Aufnahme auf dem Bildschirm (10) gegeben hat,
- wobei während des späteren erneuten Anzeigens des Teils (2) des Bilds (1) auf dem Bildschirm (10) eine Korrespondenz zwischen den kopierten Koordinaten und den neuen Koordinaten der erneuten Anzeige bewirkt wird, einschließlich des Falls, welcher die Änderung der Position an dem Bildschirm (10) des Teils (2) des Bilds (1) und die Änderung der Vergrößerung oder der Verkleinerung des Teils (2) des Bilds (1) erfordert.

2. Verfahren zum Kopieren eines Bildschirms nach Anspruch 1, **dadurch gekennzeichnet, dass** nach der Auswahl des Teils (2) des Bilds (1) durch einen Benutzer die Zeiger (5, 6) und ihre Koordinaten während eines Durchgangs über die Gesamtheit der Koordinaten des ausgewählten Teils (2) des Bilds (1) identifiziert und kopiert werden.

3. Verfahren zum Kopieren eines Bildschirms nach Anspruch 1 oder 2, **dadurch gekennzeichnet, dass** die Zeiger (5, 6), ihre Koordinaten und ihre jeweiligen Verbindungen in Form von Metadaten (18) kopiert werden, welche in die Struktur der Bilddatei (17) integriert werden, welche den ausgewählten Teil (2) des Bilds (1) enthält.

4. Verfahren zum Kopieren eines Bildschirms nach Anspruch 1 oder 2, **dadurch gekennzeichnet, dass** die Zeiger (5, 6), ihre Koordinaten und ihre jeweiligen Verbindungen in Form von Metadaten (18) kopiert werden, welche extern zu der Struktur der Bilddatei (17) sind, welche den ausgewählten Teil (2) des Bilds (1) enthält.

5. Verfahren zum Kopieren eines Bildschirms nach einem der vorhergehenden Ansprüche, **dadurch gekennzeichnet, dass** die Zeiger (5, 6), ihre Koordinaten und ihre jeweiligen Verbindungen der Verwaltungseinheit einer grafischen Schnittstelle (13) bekannt sind, welche in der Lage ist, an dem Bildschirm (10) den kopierten Teil (2) des Bilds (1) anzuzeigen.

6. Verfahren zum Kopieren eines Bildschirms nach einem der vorhergehenden Ansprüche, **dadurch gekennzeichnet, dass** die Zeiger (5, 6) Hypertext-Verbindungen sind.

7. Verfahren zum Kopieren eines Bildschirms nach einem der vorhergehenden Ansprüche, **dadurch gekennzeichnet, dass** die Objekte (8) jeweils andere anzuzeigende Bilder oder andere anzuzeigende Teile eines Bilds sind.

8. Verfahren zum Kopieren eines Bildschirms nach einem der vorhergehenden Ansprüche, **dadurch gekennzeichnet, dass** lediglich ein angezeigter Teil (2) des Bilds (1) kopiert wird, nicht das ganze angezeigte Bild (1).

9. Verfahren zum Kopieren eines Bildschirms nach einem der vorhergehenden Ansprüche, **dadurch gekennzeichnet, dass** die Bilddatei (17) in einem Format ist, welches direkt in ein anderes Dokument (16), insbesondere vom Typ einer Präsentation oder einer E-Mail, durch die Verwaltungseinheit einer grafischen Schnittstelle (13) oder auch durch eine andere Anwendung (12) integrierbar ist.

10. Verfahren zum Kopieren eines Bildschirms nach einem der vorhergehenden Ansprüche, **dadurch gekennzeichnet, dass** die Bilddatei (17) die Farbe oder die Graustufe von jedem Pixel des kopierten Teils (2) des Bilds (1) enthält.

11. Verfahren zum Kopieren eines Bildschirms nach einem der vorhergehenden Ansprüche, **dadurch gekennzeichnet, dass** bei der grafischen Auswahl (11) eines Punkts des erneut angezeigten Teils (2) des Bilds (1) durch den Benutzer die Anwendung, welche die Bilddatei (17) einliest, die Verwaltungseinheit einer grafischen Schnittstelle (13), welche den Teil (2) des Bilds (1) erneut anzeigt, oder auch eine andere Anwendung (12), welche den Teil (2) des Bilds (1) erneut anzeigt, über das Vorliegen eines Zeigers (5, 6) informiert, welcher dem ausgewählten Punkt zugeordnet ist.

12. Verwendung eines Computerprogramms zum Erstellen einer Kopie eines Bildschirms (10) gemäß dem Verfahren zum Kopieren eines Bildschirms (10) nach einem der vorhergehenden Ansprüche.

13. Computerprogramm-Produkt, umfassend Programmcode-Anweisungen, welche auf einem von einem Computer lesbaren Datenträger gespeichert sind, umfassend Programmmittel, welche durch den Computer lesbar sind, zum Erstellen einer Kopie eines Bildschirms (10) gemäß dem Verfahren zum Kopieren eines Bildschirms (10) nach einem der vorhergehenden Ansprüche, wenn das Programm auf dem Computer ausgeführt wird.

## Claims

1. Method for capturing a screenshot, comprising copying, in the form of an image file (17), a part (2) of an image (1) displayed on a screen (10) by the graphical selection (4) of this part (2) of the image (1) by a user, this copy of the selected part (2) of the image (1) automatically resulting in:
- on the one hand, the copying of the one or more pointers (5, 6) associated with this part (2) of the image (1) with the coordinates of these pointers (5, 6) in this part (2) of the image (1), these pointers (5, 6) respectively pointing to objects (8),
- on the other hand, the maintaining of the respective links between these pointers (5, 6) and these coordinates such that, during a subsequent repeat display of this part (2) of the image (1) on a screen (10), the graphical selection (11) of a point corresponding to one of these coordinates by a user automatically results in the activation of the pointer (5, 6) corresponding to the coordinate of the selected point and the pointing to the object (8) corresponding to the activated pointer (5, 6),
- the graphical selection (4) of this part (2) of the image (1) by a user being a capturing, by this user, of a portion of a screen (10) displaying this selected part (2) of the image (1),
- the coordinates of these points (5, 6) in this part (2) of the image (1) being relative coordinates which are coordinates relative to the part (2) of the image (1) captured then redisplayed, allowing the correct position of a pointer (5, 6) on the part (2) of the image (1) captured to be preserved, even if the latter is redisplayed at a different size and in a different location, compared to the initial display thereof that gave rise to the screenshot on the screen (10),
- during a subsequent repeat display of this part (2) of the image (1) on a screen (10), the copied coordinates and the new coordinates of the repeat display being matched, integrating, where appropriate, the change in position on the screen (10) of this part (2) of the image (1) and the increase or decrease in scale of this part (2) of the image (1).

2. Method for capturing a screenshot according to claim 1, **characterised in that**, after the selection of this part (2) of the image (1) by a user, these pointers (5, 6) and the coordinates thereof are identified and copied upon browsing all of the coordinates of this selected part (2) of the image (1).

3. Method for capturing a screenshot according to claim 1 or 2, **characterised in that** these pointers (5, 6), the coordinates thereof and the respective links thereof, are copied in the form of metadata (18) integrated into the structure of the image file (17) containing this selected part (2) of the image (1).

4. Method for capturing a screenshot according to claim 1 or 2, **characterised in that** these pointers (5, 6), the coordinates thereof and the respective links thereof, are copied in the form of metadata (18) external to the structure of the image file (17) containing this selected part (2) of the image (1).

5. Method for capturing a screenshot according to any of the preceding claims, **characterised in that** these pointers (5, 6), the coordinates thereof and the respective links thereof, are known by the graphical user interface manager (13) capable of displaying, on a screen (10), the copied part (2) of the image (1).

6. Method for capturing a screenshot according to one of the preceding claims, **characterised in that** the pointers (5, 6) are hyperlinks.

7. Method for capturing a screenshot according to any of the preceding claims, **characterised in that** the objects (8) are respectively other images to be displayed or other image parts to be displayed.

8. Method for capturing a screenshot according to any of the preceding claims, **characterised in that** only a part (2) of the image (1) displayed is copied, not the entirety of the image (1) displayed.

9. Method for capturing a screenshot according to any of the preceding claims, **characterised in that** the image file (17) is in a format that can be directly integrated into another document (16), in particular of the presentation or email type, by the graphical user interface manager (13) or by another application (12).

10. Method for capturing a screenshot according to any of the preceding claims, **characterised in that** this image file (17) contains the colour, or greyscale, of each pixel of the copied part (2) of the image (1).

11. Method for capturing a screenshot according to any of the preceding claims, **characterised in that**, during the graphical selection (11), by the user, of a point of the part (2) of the image (1) redisplayed, the application reading this image file (17) informs the graphical user interface manager (13) redisplaying this part (2) of the image (1) or another application (12) redisplaying this part (2) of the image (1), of the existence of a pointer (5, 6) associated with this selected point.

12. Use of a computer program for capturing a screenshot (10) according to the method for capturing a screenshot (10) according to any of the preceding claims.

13. Computer program product, comprising program code instructions saved on a computer-readable medium, comprising computer-readable programming means for capturing a screenshot (10) according to the method for capturing a screenshot (10) according to any of the preceding claims, when said program is executed on a computer.
